# EUROPEAN PATENT APPLICATION

(11) **EP 3 811 776 A1**
(43) Date of publication of application: **28.04.2021**
(21) Application number: 20203467.4
(22) Date of filing: 22.10.2020
(51) Int. Cl.: A01K 61/10

(54) **FISH FARM FOR RAISING FISH IN THE OPEN SEA**

(30) Priority: 24.10.2019 BE 201905737
(71) Applicant: Dredging International N.V., 2070 Zwijndrecht (BE)
(72) Inventor: Durt, Dominique Maria Colette Hubert, 2640 Mortsel (BE); Donze, Fabian, 2610 Wilrijk (BE)
(74) Representative: Arnold & Siedsma

(57) **Abstract**

Described is a fish farm for raising fish in the open sea. The fish farm comprises an elongate support pile which is anchored on an underside to the seabed, and a cage structure which is arranged round the support pile and comprises walls which are substantially impenetrable to the fish for raising. The cage structure is suspended from the support pile by means of suspending means such as traction cables, wherein height-adjusting means can vary the length of the suspension so that the cage structure can be moved along the support pile between a position in which the cage structure is situated above water and a position in which the cage structure is situated under water. Also described is a method for constructing the fish farm at open sea.

## Description

### TECHNICAL FIELD OF THE INVENTION

The present invention relates to a fish farm for raising fish in the open sea. It further relates to a method for constructing the fish farm at open sea.

### BACKGROUND OF THE INVENTION

Aquaculture comprises the raising of aquatic organisms, including fish, molluscs, shellfish and aquatic plants, under controlled conditions as food but optionally also for cosmetics, pharmaceuticals and other applications. Such fish farming can meet an increasing demand for fish caused by a growing world population and because people are eating more fish instead of meat, which is deemed less ecologically responsible. Fish farming is further seen as a solution to by catch in fishing in the wild. This by catch can be as much as 40% of the total catch, and hundreds of thousands of protected animals, such as whales, dolphins and turtles, become entangled in nets every year. Aquaculture can provide a solution to this.

Fish farms can be located at the coast. Such nearshore fish farms are however susceptible to disease and predators gaining access, and generally have a relatively low capacity. Space by the coast, which is also used by other actors such as tourism, can form a limiting factor. The environmental impact of aquaculture must also remain limited here.

Recently, there have been developments wherein offshore fish farms are employed in the open sea. These fish farms generally comprise a floating cage structure which can be inhabited by the fish for raising. Due to the relatively rough conditions at open sea, such constructions take a heavy form and require high investments. Installing and keeping in position such a fish farm at open sea requires a lot of effort, and the known fish farms of this type are moreover very high-maintenance.

There is therefore a need to provide a fish farm for raising fish in the open sea which requires less maintenance and is better able to withstand the rough conditions at open sea.

### SUMMARY OF THE INVENTION

It is an object of the present invention to provide a fish farm for raising fish in the open sea which obviates or at least reduces at least one of the above stated and/or other drawbacks associated with the known fish farms.

This and other objects are achieved by providing a fish farm according to the appended claim 1. The fish farm for raising fish in the open sea comprises particularly an elongate support pile which is anchored on an underside to the seabed, and a cage structure which is arranged round the support pile and comprises walls which are substantially impenetrable to the fish for raising, and which is suspended from the support pile by means of suspending means such as traction cables, wherein height-adjusting means can vary the length of the suspension, such as for instance the length of the traction cables, so that the cage structure can be moved along the support pile between a position in which the cage structure is situated above water and a position in which the cage structure is situated under water.

The suspension means can comprise chains, hydraulic and/or pneumatic cylinders, and mechanical suspending means such as for instance gear racks. Suspending means in the form traction cables are preferred.

The stability of the fish farm in its various operational modes is of the greatest importance and depends largely on the support pile, which is anchored to the seabed and which is configured to bear the loads in all operational modes. These operational modes can for instance comprise a normal operational mode wherein the cage structure is situated with at least a part of its height above water, a storm mode wherein the cage structure is situated wholly under water, and a maintenance mode wherein the cage structure can be situated wholly above water. The support pile and the suspension by means of suspending means such as traction cables are able to support the cage structure provided with fish for raising in the above stated operational modes.

The elongate support pile can have a circular cross-section, but can also be polygonal. The cage structure can be arranged coaxially around the elongate support pile, and comprises for instance a number of stiffening ribs which are directed radially outward at different heights and are mutually connected to an outer radius with peripherally and vertically running stiffening ribs. According to the invention, such a type of cage structure can be submerged during heavy storms or typhoons in order to prevent damage to the cage structure and the offshore fish farm. In submerged mode the cage structure is less exposed to rough sea conditions and wave action. The fish for raising is here also exposed less to movements and physical stresses generated by the storm.

The proposed construction, wherein the support pile anchored to the seabed bears the major part of the forces and transmits them to the seabed, enables the cage structure to take a lighter form than the known floating cage structure. The fish farm according to the invention has the further advantage that it can be constructed, at least partially, on location at open sea. The support pile will thus generally be anchored to the seabed separate from the cage structure, and the cage structure will only be mounted on the support pile afterwards. This facilitates transport of the fish farm to the desired location at open sea. The fish farm in fact need not be transported as a whole.

Open sea is understood to mean a portion of the sea lying outside the protected coastal area but extending into the territorial waters (up to about 22 km from the coastline), more preferably an area which extends beyond the territorial waters and into the exclusive economic zone (EEZ), still more preferably an area lying beyond the EEZ (further than about 370 km from the coastline). Known fish farms are usually situated behind a (natural) shelter, for instance formed by a peninsula or island.

In an embodiment of the invention a fish farm is provided wherein the support pile comprises a transition piece connected to an upper side of the support pile, and the cage structure is suspended from the transition piece. This has the advantage that one type of support pile can be used for different fish farms, wherein the separate transition piece can be adapted to the specific requirements set for the fish farm in question. If needed, a transition piece can be removed from a support pile and another transition piece be provided onto the support pile. This leaves the support pile unaffected, and provides flexibility with respect to changing the characteristics of the fish farm.

The transition piece can be coupled in known manner to a support pile anchored to the seabed. The support pile can thus be provided on an upper side with a flange for coupling to a corresponding flange provided on an underside of the transition piece. The flanges can for instance be coupled by means of bolt connections, or in any other manner known to the skilled person.

In an embodiment of the invention a fish farm is provided wherein the transition piece comprises the height-adjusting means. In this embodiment the suspension means such as the traction cables run from a position connected to the transition piece to a position connected to the cage structure. A suitable connection can for instance comprise a flange plate welded onto the transition piece and/or the cage structure, or a lifting eye, or another suitable connection. The height-adjusting means are configured to vary the length of the suspending means such as the traction cables between the two positions so that the cage structure can be moved along the support pile between a position in which the cage structure is situated above water and a position in which the cage structure is situated under water. The height-adjusting means can be embodied in known manner. In an embodiment it is thus possible for the height-adjusting means to comprise a hydraulic and/or electric winch. An end part of each traction cable is then wound round the winch, wherein the length can be varied by rotating the winch. When shortening the length, the winch is rotated such that the traction cable is rolled onto the winch. When lengthening the length, the winch is rotated such that the traction cable is unrolled from the winch.

According to an embodiment, the decision to lower the cage structure to a storm position can be taken on the basis of measured or, if desired, predicted wind data, wave data or other data, such as for instance ice formation. The cage structure can optionally be moved upward or downward, for instance in accordance with the tide. The winches can optionally comprise constant tension winches. These are configured to keep the traction cables at a substantially constant tension, but have the drawback that they consume a lot of energy. This can optionally provide for a continuous adjustment of the height of the cage structure, for instance depending on the forces exerted on the cage structure by wave action. If these become too high, for instance due to an impending storm, the tension in the traction cables is in danger of rising. This rise is compensated by the constant tension winches by having the traction cables unroll, whereby the cage structure will drop (slightly) to a position with less wave action.

The cage structure is suspended from the support pile or, in an embodiment, from the transition piece using suspending means such as traction cables. In an embodiment the number of traction cables can be selected freely, with a minimum of two traction cables arranged on opposite sides of the support pile and/or the transition piece. The number of traction cables is preferably at least 3, more preferably at least 4 and most preferably 4-12.

The transition piece bridges the distance between an upper side of the support pile and a position above the water surface. If desired, other structures can be mounted on an upper side of the transition piece. In an embodiment of the fish farm the transition piece comprises on an upper side a platform from where all manner of operations can be performed, such as for instance maintenance of the cage structure. The platform can for instance comprise a control room or a helipad, or other useful facilities. The suspension of the cage structure on the support pile and/or on the suspension piece thereof is preferably configured such that the cage structure can be moved to a position in the vicinity of the platform. This improves the reachability of the cage structure from the platform.

According to the invention, the transition piece can fulfil multiple functions. In an embodiment of the fish farm the transition piece is thus configured to comprise a storage for fish feed, among other things. Other functions to be incorporated in the transition piece comprise supply and discharge of fish for raising, electricity supplies and other energy supplies, and so on.

The fish farm can function well in the open sea. An improved embodiment of the fish farm further comprises measuring means for measuring the ambient values such as the temperature, the salt content, the oxygen content, the acidity and other useful ambient values. These measuring means are per se known.

The measuring means can be advantageously utilized in an embodiment of the fish farm which further comprises control means for setting the height position of the cage structure subject to the tide and/or the measured ambient values, particularly the measured temperature and/or the measured oxygen content.

The suspension of the cage structure on the support pile (or the transition piece thereof), which is movable in height direction, can be embodied in different ways. A practical embodiment comprises a fish farm wherein the cage structure comprises an inner shaft which is movable along the support pile. If desired, damping material can be situated between the inner shaft and the support pile.

Another embodiment comprises a fish farm wherein the support pile comprises at least one support point or support ring on which the inner shaft of the cage structure can rest in its lowermost position. This prevents the cage from coming into contact with the seabed or resting or supporting thereon. This embodiment can also be useful for replacing for instance cables.

Fish for raising must be supplied to the fish farm, and discharged again after being raised. In an embodiment the support pile and/or the transition piece can for this purpose comprise transport means for supplying and discharging fish for raising to and from the cage structure, for instance in the form of rigid or flexible supply and discharge hoses or pipes.

In principle the cage structure can be lowered along the support pile under the influence of its own weight. If desired, in an embodiment a fish farm can be provided which further comprises a ballast system, preferably at least one ballast tank connected to the cage structure. For submersion, the ballast system can be filled with a medium as heavy as or heavier than water, and/or for raising it can be filled with a medium lighter than water, for instance air. It is also possible to give the frame parts of the support frame an at least partially hollow form so that these parts can receive ballast. With the fish farm according to the invention large quantities of fish can be raised in the open sea. The dimensions of the cage structure and the support pile can be adjusted accordingly for this purpose. A practical embodiment has a support pile with a length of between 5 and 15 m, which support pile is preferably placed at water depths of 15 to 50 m.

A particularly suitable fish farm according to an embodiment comprises a transition piece with a length of between 25 and 75% of the length of the support pile. In another embodiment the height of the support pile is determined such that it reaches at most to the waterline at high water. In an embodiment the optional platform of the fish farm extends above the waterline such that an upper part of the platform protrudes above the greatest wave height (in accordance with the 100 year storm).

In another aspect of the invention a method is provided for constructing a fish farm in the open sea. In the method a support pile is taken up from a deck of a vessel by a hoisting means and placed under water in vertical position, after which the support pile is anchored to the seabed, and a cage structure which comprises walls which are substantially impenetrable to the fish for raising is suspended from the support pile using suspending means, such as traction cables, provided on the support pile for this purpose. The method is particularly suitable for constructing a stable and low-maintenance fish farm at open sea.

The anchoring to the seabed can take place in any manner. It is thus possible to strike, vibrate or drill the support pile into the seabed using equipment suitable for this purpose.

A particularly suitable method for arranging the support pile from a vessel suitable for this purpose is described in WO2019/149674, the content of which is wholly and explicitly included in the present application.

In an embodiment of the method a transition piece is taken up from a deck of a vessel by a hoisting means and placed in vertical position on the support pile and connected to an upper side of the support pile, and the cage structure is suspended from the transition piece.

In yet another aspect of the invention an assembly is provided of the invented fish farm and a number of wind turbines at open sea, wherein the wind turbines form a network and the fish farm is located in the network at a distance from the wind turbines such that a maintenance vessel is able to reach the fish farm. In this way multifunctional use is made of this 'reserved' secured zone which is closed off to shipping traffic and fishing. In such an assembly use can also advantageously be made of the infrastructure, already existing for the wind turbines, for power supply, maintenance and the like.

The embodiments of the invention described in this patent application can if desired be combined in any possible combination of these embodiments, and each embodiment individually can form the subject matter of a divisional patent application.

### BRIEF DESCRIPTION OF THE FIGURES

The invention will now be further elucidated with reference to the following figures and description of preferred embodiments, without the invention otherwise being limited thereto. In the figures:
Fig. 1 is a schematic perspective view of a fish farm according to an embodiment of the invention;

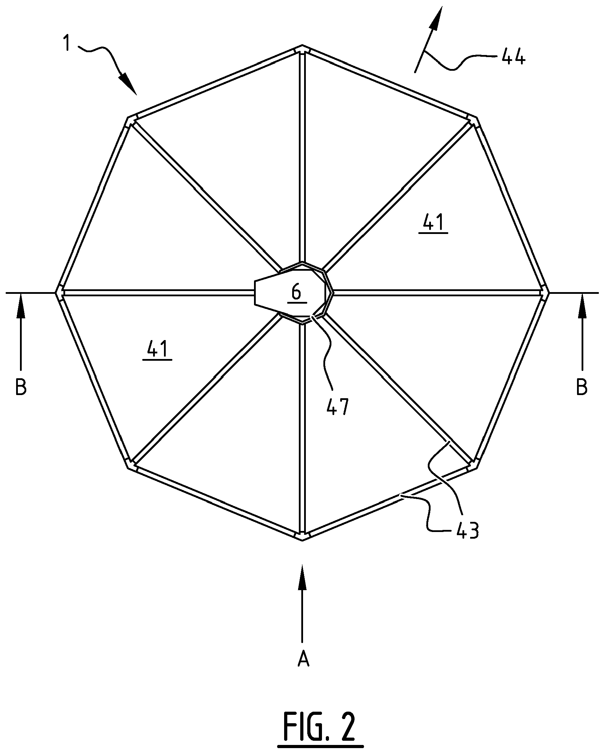

Fig. 2 is a schematic top view of the embodiment shown in figure 1;
Fig. 3 is a schematic side view of the fish farm shown in figure 1 from the position A;
Fig. 4 is a schematic cross-section of the fish farm shown in figure 1 along the line B-B;
Fig. 5 is a schematic top view of an assembly of a fish farm and a number of wind turbines at open sea according to an embodiment of the invention, and finally
Fig. 6 is a schematic perspective view of an assembly of a fish farm and a number of wind turbines at open sea according to an embodiment of the invention.

### DETAILED DESCRIPTION OF EXEMPLARY EMBODIMENTS

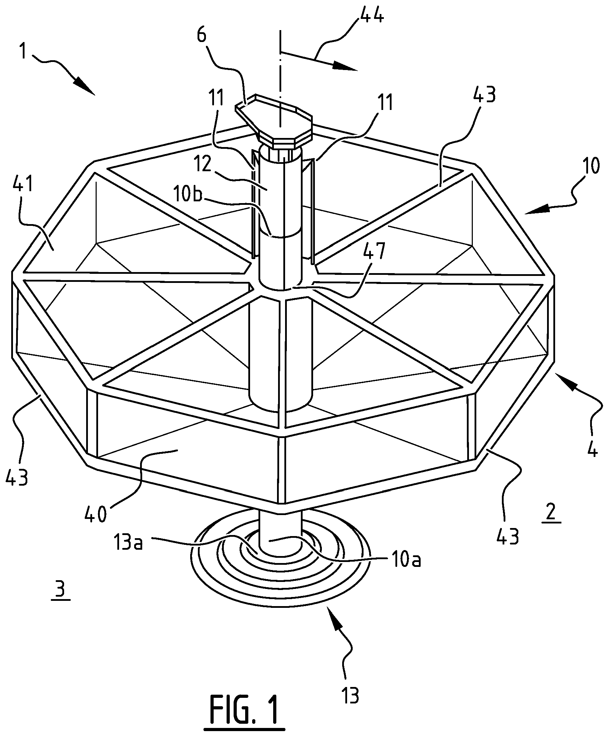

Referring to figure 1, a fish farm 1 is shown for raising fish in the open sea 2. Fish farm 1 comprises an elongate support pile 10 which is anchored on an underside 10a to seabed 3. Arranged round support pile 10 is a cage structure 4 comprising side walls 40, upper walls 41 and lower walls 42 which are impenetrable to the fish for raising. The walls (40, 41, 42) of cage structure 4 are incorporated in a framework consisting of a number of mutually connected ribs 43. The ribs run horizontally, vertically and inclining downward, some in a radial direction 44 relative to support pile 10. Due to the considerable dimensions of cage structure 4, each rib 43 is preferably embodied as a lattice structure.

Cage structure 4 is suspended from support pile 10 with a number of traction cables 11. Traction cables 11 run between support plates 23 welded onto a transition piece 12 connected to an upper side 10b of support pile 10 and fixing eyes 45 which are arranged on an upper side of cage structure 4. For connection to support pile 10 the transition piece 12 can be provided with a flange (not shown) which can be connected onto a corresponding flange (not shown) of support pile 10, for instance with a bolt connection.

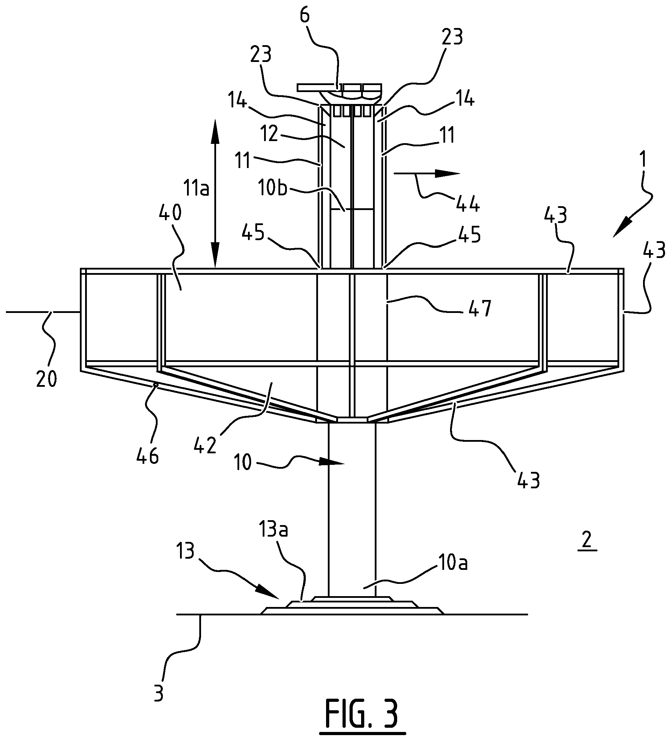

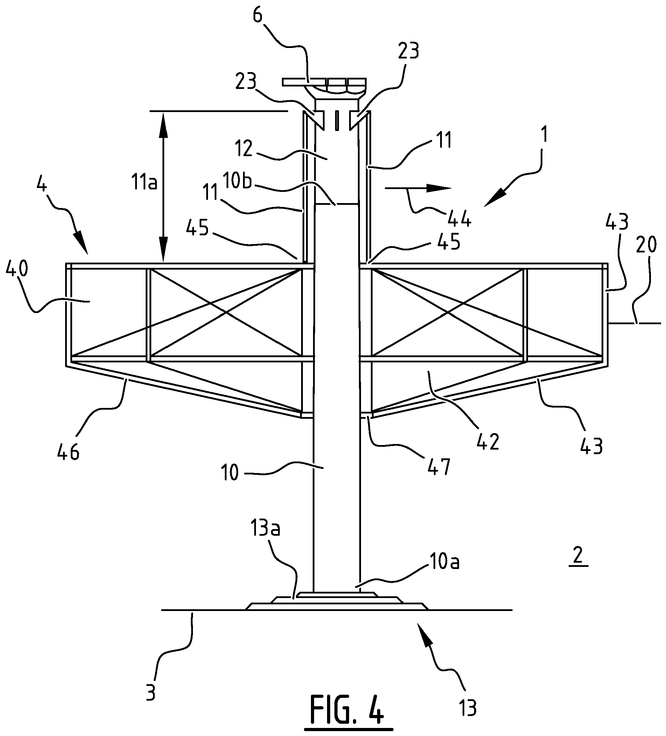

According to figure 3, height-adjusting means in the form of winches 14 arranged on transition piece 12 are provided. In addition to a hydraulic and/or electric winch 14, the height-adjusting means can also comprise a gear rack or a hydraulic and/or pneumatic cylinder. Traction cables 11 each run over a corresponding winch 14, such that the length 11a of traction cables 11 can be varied so that cage structure 4 can be moved as a whole along support pile 10, and optionally also along transition piece 12, between a position in which cage structure 4 is situated above the water level 20 and a position in which cage structure 4 is situated below the water level 20. In the situation shown in figures 3 and 4 cage structure 4 lies partially above water level 20 and partially below it.

In the shown embodiment transition piece 12 is provided on an upper side with a platform 6, provided with a helipad H. Cage structure 4 can in principle be moved to a position in the vicinity of platform 6 using traction cables 11. If desired, transition piece 12 and/or support pile 10 can comprise a storage (not visible) for fish feed.

In an embodiment the fish farm 1 is further provided with measuring means 46 for measuring ambient conditions such as for instance the water temperature and/or the oxygen content under water. These measuring means 46 can for instance be arranged on a rib 43 of cage structure 4, as shown. Measuring means 46 can also be provided on other components, such as for instance support pile 10. Measuring means 46 are preferably integrated in a control circuit in which are also integrated control means (not shown) for setting the height position of cage structure 4 subject to the measured values of the ambient conditions such as the water temperature and/or the oxygen content. If a height position is found not to be particularly advantageous for the fish in cage structure 4, this height position can thus be adjusted until a more favourable situation for the fish present in cage structure 4 is reached.

Support pile 10 of fish farm 1 can be provided with at least one support point or support ring 13a on which an inner shaft 47 of cage structure 4 can rest in a lowermost position. Support ring 13a can for instance comprise an upper part of an annular foot 13 which is arranged round support pile 10 at the position of seabed 3, for instance in order to protect against soil erosion. Support ring 13a can however also be situated around support pile 10 at a higher position, and is here mounted fixedly on support pile 10 so that support ring 13a is able to perform its supporting function.

For a practical operation of the fish farm the transition piece 12 and/or support pile 10 can also be provided with transport means in the form of optionally flexible pipes for supplying and discharging fish for raising to and from cage structure 4.

Fish farm 1 can also comprise a ballast system comprising at least one ballast tank connected to cage structure 4.

Fish farm 1 can be constructed in the open sea with a method in which a support pile 10 is taken up from a deck of a vessel by a hoisting means such as a lifting crane and is placed under water in vertical position, support pile 10 is anchored to seabed 3 and a cage structure 4 as described above is suspended from support pile 10 with traction cables 11 provided for this purpose on support pile 10 or a transition piece 12 connected thereto.

If a transition piece 12 is applied, the method further comprises of taking up a transition piece 12 from a deck of a vessel with the hoisting means and placing transition piece 12 on support pile 10 in vertical position, and connecting the transition piece to an upper side 10b of support pile 10, for instance by means of bolting two corresponding flanges together. Cage structure 4 is then suspended from transition piece 12.

A particularly suitable method for placing the support pile 10, and optionally placing the transition piece 12 on support pile 10, is described in detail in WO2019/149674, the content of which is explicitly referred to and which content is wholly included in the present application.

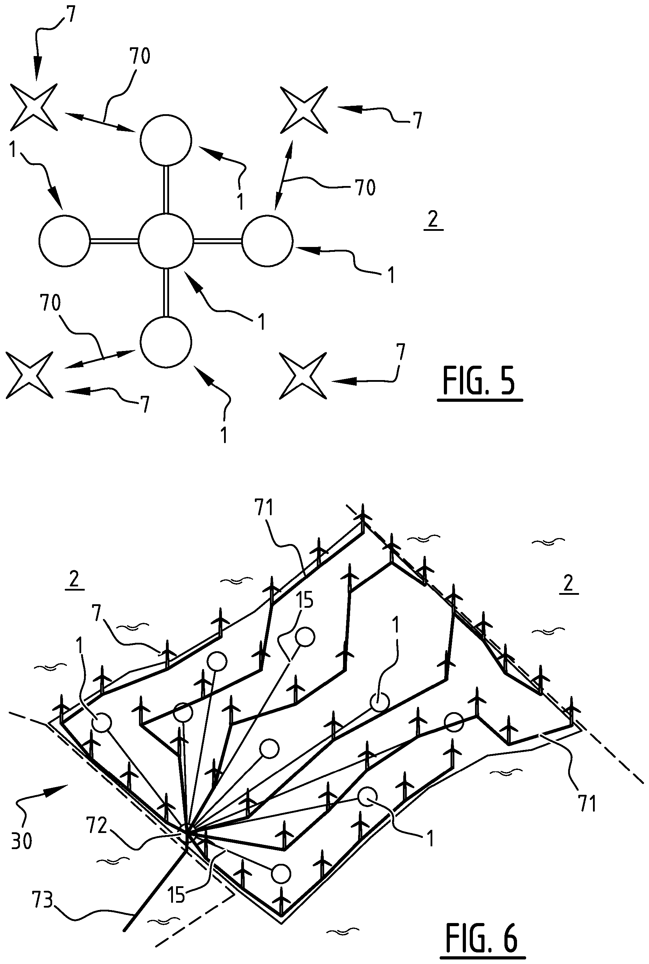

An assembly of several fish farms 1 as described above and a number of wind turbines 7 at open sea 3 is shown in figures 5 and 6. In the configuration of figure 5 the wind turbines 7 form a square network and the fish farms 1 are located in the network at a distance 70 from wind turbines 7 such that a maintenance vessel (not shown) is able to reach the fish farms without for instance a high risk of damage.

Figure 6 shows another possible configuration, wherein the network of wind turbines 7 is mutually connected by means of network cables 71 for supply of power. Network cables 71 are all connected to a hub 72, from where a network export cable 73 runs to for instance land. Placed in hub 72 is a fish farm which is connected by means of network cables 15 for power supply to other fish farms 1 in the area 30. Fish farms 1 are once again positioned at sufficient distance from wind turbines 7 that a maintenance vessel (not shown) can reach fish farms 1 without for instance a high risk of damage. In this way multifunctional use is made of the area 30 which is closed off to through shipping traffic.

The invention is not limited to the embodiments shown in the figures, and many variants thereof are possible within the scope of protection of the appended claims.

## Claims

1. Fish farm for raising fish in the open sea, comprising an elongate support pile which is anchored on an underside to the seabed, and a cage structure which is arranged round the support pile and comprises walls which are substantially impenetrable to the fish for raising, and which is suspended from the support pile by means of suspending means such as traction cables, wherein height-adjusting means can vary the length of the suspension so that the cage structure can be moved along the support pile between a position in which the cage structure is situated above water and a position in which the cage structure is situated under water, wherein a transition piece is coupled to the support pile by being connected to an upper side of the support pile, and the cage structure is suspended from the transition piece.

2. Fish farm according to claim 1, wherein the transition piece comprises the height-adjusting means.

3. Fish farm according to any one of the foregoing claims, wherein the height-adjusting means are selected from a hydraulic and/or electric winch, a gear rack and a hydraulic and/or pneumatic cylinder.

4. Fish farm according to any one of the foregoing claims, wherein the transition piece comprises on an upper side a platform and the cage structure can be moved to a position in the vicinity of the platform.

5. Fish farm according to any one of the foregoing claims, wherein the transition piece comprises a storage for fish feed.

6. Fish farm according to any one of the foregoing claims, further comprising measuring means for measuring the temperature and/or the oxygen content under water.

7. Fish farm according to claim 6, further comprising control means for setting the height position of the cage structure subject to the measured temperature and/or the measured oxygen content.

8. Fish farm according to any one of the foregoing claims, wherein the support pile comprises at least one support point or support ring on which the inner shaft of the cage structure can rest in its lowermost position.

9. Fish farm according to any one of the foregoing claims, wherein the transition piece and/or the support pile comprises transport means for supplying and discharging fish for raising to and from the cage structure.

10. Fish farm according to any one of the foregoing claims, further comprising a ballast system comprising at least one ballast tank connected to the cage structure.

11. Fish farm according to any one of the foregoing claims, wherein the support pile has a length of between 5 and 15 m.

12. Fish farm according to any one of the foregoing claims, wherein the transition piece has a length of between 25 and 75% of the length of the support pile.

13. Method for constructing a fish farm according to any one of the foregoing claims in the open sea, wherein a support pile is taken up from a deck of a vessel by a hoisting means and placed under water in vertical position, the support pile is anchored to the seabed, and a cage structure which comprises walls which are substantially impenetrable to the fish for raising is suspended from the support pile using traction cables provided on the support pile for this purpose, wherein a transition piece is taken up from a deck of a vessel by a hoisting means and placed in vertical position on the support pile and connected to an upper side of the support pile, and the cage structure is suspended from the transition piece.

14. Assembly of a fish farm according to any one of the foregoing claims 1-12 and a number of wind turbines at open sea, wherein the wind turbines form a network and the fish farm is located in the network at a distance from the wind turbines such that a maintenance vessel is able to reach the fish farm.
